# FASCICULE DE BREVET EUROPEEN

(11) **EP 1 037 435 B1**
(45) Date de publication et mention de la délivrance du brevet: **03.09.2008**
(21) Numéro de dépôt: 00400729.0
(22) Date de dépôt: 16.03.2000
(51) Int. Cl.: H04L 12/58, H04N 1/00, H04L 29/06, H04L 29/12

(54) **Procédé de configuration d'une connexion à un réseau informatique (p. e. Internet)**
Verfahren zur Konfiguration einer Verbindung mit einem Netzwerk (z. B. Internet)
Method for configuring a connection to a data network (e.g. Internet)

(30) Priorité: 18.03.1999 FR 9903348
(43) Date de publication de la demande: 20.09.2000
(73) Titulaire: SAGEM Communication, 75015 Paris (FR)
(72) Inventeur: Ardin, Christian, 27860 Heudicourt (FR)
(74) Mandataire: Bloch, Gérard

(56) Documents cités:
- EP-A- 0 812 100
- EP-A- 0 892 527
- US-A- 5 757 891

## Description

Un réseau informatique tel que l'Internet permet à des utilisateurs de visiter des sites Web, d'envoyer et de recevoir des courriers électroniques, ou encore de dialoguer entre eux.

Pour se connecter à l'Internet, il convient de s'équiper d'un équipement de communication tel qu'un ordinateur PC (Personal Computer / ordinateur personnel), comprenant une application de connexion à l'Internet, par l'intermédiaire d'un fournisseur d'accès, et de configurer la connexion Internet, en renseignant certains paramètres, relatifs au fournisseur - adresse IP, noms de domaine de serveurs de messagerie SMTP (Simple Mail Transfer Protocol / protocole simple de transfert de courrier), pour l'expédition de courriers électroniques, et POP (Post Office Protocol / protocole de réception de courriers), pour la réception de courriers électroniques - ou relatifs à l'utilisateur - codes d'accès, mots de passe associés et adresse de courrier électronique, ou "adresse e-mail".

Les paramètres de configuration de connexion Internet peuvent être saisis par l'utilisateur, à l'aide d'un clavier, par le biais d'une interface utilisateur, puis enregistrés dans une mémoire de l'ordinateur, comme cela est notamment enseigné par EP 0 892 527.

Il existe également des logiciels de configuration automatique de connexion Internet, disponibles sur CD-ROM (Compact Disc - Read Only Memory / disque compact - mémoire à lecture seule). Pour configurer la connexion Internet, il suffit à l'utilisateur d'introduire le CD-ROM dans le lecteur de CD-ROM de son ordinateur et de lancer l'exécution du logiciel de configuration. Le logiciel établit un dialogue avec le système d'exploitation de l'ordinateur, au cours duquel les paramètres de configuration de connexion Internet sont renseignés.

Certains télécopieurs comprennent une application de connexion à l'Internet et une application de messagerie électronique permettant d'envoyer et de recevoir des télécopies par courriers électroniques. Généralement, les télécopieurs ne comprennent pas de lecteur de CD-ROM, ou de support informatique de ce type, de sorte que les logiciels de configuration automatique de connexion Internet, disponibles sur supports informatiques, sont inutilisables avec ces télécopieurs. Pour configurer la connexion Internet, un utilisateur doit obligatoirement saisir les paramètres de configuration de connexion Internet.

La présente invention propose de simplifier la configuration de connexion Internet, et plus généralement à tout autre réseau informatique de ce type, notamment pour les télécopieurs.

A cet effet, l'invention concerne un procédé de configuration d'une connexion à un réseau informatique d'un équipement de communication comprenant des moyens de connexion au réseau informatique, dans lequel c'est avant de mettre en service l'équipement et de le connecter au réseau informatique qu'on mémorise dans l'équipement des paramètres de configuration de connexion audit réseau.

Grâce à l'invention, il n'est plus nécessaire d'introduire un support informatique de type CD-ROM dans l'équipement. Dès sa mise en service, autrement dit dès sa première utilisation, l'équipement est opérationnel pour se connecter au réseau informatique. Il est même particulièrement intéressant de procéder à une telle configuration en usine, ce service étant rendu par le constructeur.

Avantageusement, avant de mettre en service l'équipement et de le connecter au réseau informatique, on mémorise dans l'équipement une adresse de messagerie électronique provisoire.

Grâce à cela, dès la mise en service de l'équipement, l'utilisateur peut envoyer et recevoir des courriers électroniques.

De préférence, l'équipement bénéficiant d'un service de messagerie électronique auprès d'un fournisseur du réseau informatique, l'équipement se connecte au fournisseur et lui adresse une requête pour obtenir une adresse de messagerie électronique définitive.

Avantageusement encore, le fournisseur compare l'adresse de messagerie électronique requise à celles contenues dans une table d'adresses de messagerie électronique indisponibles pour, dans le cas où la table ne contient pas l'adresse de messagerie électronique requise, attribuer celle-ci à l'équipement et, dans le cas contraire, attribuer à l'équipement une adresse de messagerie électronique disponible.

De préférence, l'équipement adresse par courrier électronique la requête pour obtenir une adresse de messagerie électronique définitive.

De préférence encore, le fournisseur envoie à l'équipement un courrier électronique spécifiant l'adresse de messagerie électronique qu'il lui a attribuée.

Le fournisseur et l'équipement dialoguant par courriers électroniques, il n'est pas nécessaire de prévoir un protocole de communication spécifique entre eux.

L'invention sera mieux comprise à l'aide de la description suivante d'une forme de réalisation particulière du procédé de configuration de connexion à un réseau informatique de l'invention, en référence au dessin annexé sur lequel:

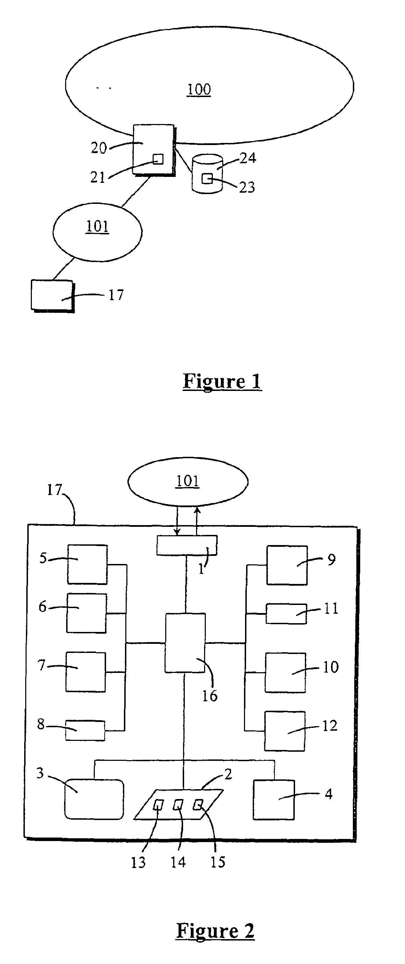

- la figure 1 représente un schéma d'un équipement de communication relié à l'Internet et
- la figure 2 représente un schéma bloc fonctionnel de l'équipement de la figure 1.

Le procédé de l'invention permet de configurer, de façon automatique, une connexion à un réseau informatique, en l'espèce l'Internet 100, d'un équipement de communication, ici un télécopieur 17.

Le télécopieur 17 comprend une interface ligne 1 de liaison à un réseau téléphonique, en l'espèce le réseau téléphonique commuté RTC 101, et de transmission de données, comportant un modem, une interface homme-machine, un bloc de télécopie 5, un bloc d'analyse d'image 6, un bloc d'impression 7 et une mémoire de télécopies 8.

L'interface homme-machine comprend un clavier de saisie 2, un écran d'affichage 3 et une application 4 de gestion d'une interface utilisateur. L'interface utilisateur est destinée à faire communiquer le télécopieur 17 et un utilisateur, par l'affichage d'informations à l'écran 3.

Le bloc de télécopie 5 comprend une application pour émettre et recevoir des télécopies à travers le réseau téléphonique 101, suivant un protocole de transmission de télécopie, en l'espèce le protocole T30.

Le bloc d'analyse d'image 6 et le bloc d'impression 7 sont respectivement destinés à analyser et à imprimer des télécopies. La mémoire de télécopies 8 est destinée à contenir des télécopies.

Le télécopieur 17 comprend en outre un bloc de connexion Internet 9, un bloc de messagerie électronique Internet 10, une mémoire 11 de configuration de connexion Internet et un bloc 12 de confirmation de connexion Internet et de changement d'adresse de messagerie électronique.

Le bloc de connexion Internet 9 comprend une application de connexion téléphonique à l'Internet 100, permettant au télécopieur 17 de se connecter à l'Internet 100, à travers le réseau téléphonique 101, par l'intermédiaire d'un fournisseur d'accès à l'Internet 100.

Le bloc de messagerie électronique Internet 10 comprend une application pour préparer, émettre et recevoir des courriers électroniques.

Un courrier électronique est un moyen de communication à travers l'Internet 100, comprenant un message et un en-tête. L'en-tête contient un champ de provenance "FROM", un champ de destination "TO" et un champ objet "OBJECT", respectivement destinés à contenir une adresse de messagerie électronique de provenance du courrier, une adresse de messagerie électronique de destination du courrier et l'objet du courrier. Une adresse de messagerie électronique, plus couramment appelée "adresse e-mail", est l'adresse, sur l'Internet 100, d'une boîte à lettres électronique, destinée à recevoir et à stocker des courriers électroniques transmis à travers l'Internet 100.

Le bloc 12 de confirmation de connexion Internet et de changement d'adresse de messagerie électronique est destiné à confirmer une connexion Internet provisoire et, le cas échéant, à demander un changement d'adresse e-mail, par envoi d'une requête à un fournisseur d'accès et de messagerie électronique de l'Internet 100, par courrier électronique, comme explicité plus loin.

Le clavier de saisie 2, outre des touches standards de télécopieur, comporte une touche 13 de connexion Internet, une touche 14 d'émission de télécopie par courrier électronique et une touche 15 de téléchargement de courriers électroniques depuis une boîte à lettres électronique.

Enfin, le télécopieur 17 comprend un bloc de commande 16, en l'espèce un microprocesseur, auquel tous les éléments du télécopieur 17 sont reliés, destiné à commander le fonctionnement et à exécuter les applications du télécopieur 17.

Avant de mettre en service le télécopieur 17, c'est-à-dire avant sa première utilisation, ici en usine et en fin de chaîne de fabrication, on mémorise des paramètres de configuration de connexion à l'Internet 100, indiqués dans le tableau ci-dessous, dans la mémoire 11 du télécopieur 17.

**Tableau**

| **Paramètres** | **Valeurs des paramètres** |
|---|---|
| Login de connexion Internet | Dpnt |
| Mot de passe de connexion Internet | Jlkf26 |
| Login de messagerie électronique Internet | Dpnt |
| Mot de passe de messagerie électronique Internet | Jlkf26 |
| Adresse e-mail | pr.dpnt@alfa.fr |
| Adresse IP du fournisseur d'accès à l'Internet | 456.896.54.23 |
| Nom de domaine du serveur SMTP | mail.alfa.fr |
| Nom de domaine du serveur POP | mail.alfa.fr |
| Numéro de téléphone du fournisseur d'accès | 01.45.56.52.00 |
| Adresse e-mail d'une boîte à lettres de confirmation de connexion Internet et de changement d'adresse e-mail | service.connexion@alfa.fr |

Dans l'exemple particulier de la description, le télécopieur 17 est configuré pour se connecter à l'Internet 100 par l'intermédiaire du fournisseur "alfa" 20 d'accès à l'Internet 100 et de messagerie électronique. Ce fournisseur 20 est connecté en permanence à l'Internet 100 et relié au réseau téléphonique 101. Il comprend une base de données utilisateurs 24 contenant, pour chaque utilisateur, un login et un mot de passe associé de connexion Internet et, le cas échéant, un login et un mot de passe associé de messagerie électronique, ainsi qu'une adresse e-mail. Les adresses e-mail de la base de données 24, attribuées à des utilisateurs, sont stockées dans une table 23 d'adresses e-mail indisponibles. Le fournisseur 20 comprend en outre une boîte à lettres électronique 22, de confirmation de connexion Internet et de changement d'adresse e-mail, destinée à recevoir des courriers électroniques de confirmation de connexion Internet et éventuellement de changement d'adresse e-mail, comme explicité plus loin.

Le télécopieur 17, tel que configuré en usine préalablement à sa mise en service, bénéficie provisoirement, pendant une période d'essai limitée, ici de quinze jours, à compter de la première connexion du télécopieur 17 à l'Internet 100, d'un accès à l'Internet 100 et d'un service de messagerie électronique, fournis par le fournisseur 20. Pendant la période d'essai, le télécopieur 17 dispose, auprès du fournisseur 20, d'une boîte à lettres électronique 21 avec une première adresse e-mail ("pr.dpnt@alfa.fr"), provisoire et modifiable, comme explicité plus loin.

On notera que par le terme "login", on entend désigner un code d'accès. Le login de connexion Internet et le login de messagerie électronique permettent au fournisseur 20 d'identifier le télécopieur lorsqu'il se connecte à l'Internet 100 et lorsqu'il utilise le service de messagerie électronique, respectivement. Chaque login est associé à un mot de passe permettant au fournisseur 20 de contrôler l'accès du télécopieur 17 à l'Internet 100 ou au service de messagerie électronique.

Une adresse IP (Internet Protocol - protocole Internet) ou un nom domaine, attribués à une entité, permettent de localiser cette entité sur l'Internet 100.

Le serveur SMTP (Simple Mail Transfer Protocol - protocole simple de transfert de courrier) est un serveur de messagerie-expédition, destiné à envoyer des courriers électroniques à travers l'Internet 100. Le serveur POP (Post Office Protocol - protocole de réception de courrier) est un serveur de messagerie-réception destiné à réceptionner des courriers électroniques et à les conserver jusqu'à ce que leurs destinataires viennent les récupérer, par téléchargement.

Enfin, le numéro de téléphone du fournisseur 20 est un numéro d'appel téléphonique, sur le réseau téléphonique 101, du fournisseur 20, que le télécopieur 17 doit composer pour se connecter au fournisseur 20 et, par son intermédiaire, à l'Internet 100.

En fonctionnement, le bloc de connexion Internet 9 et le bloc de messagerie 10 sont destinés à utiliser les paramètres de configuration de connexion Internet stockés dans la mémoire 11, pour connecter l'équipement 17 à l'Internet 100 ainsi que pour préparer, émettre et télécharger des courriers électroniques.

Le fonctionnement du télécopieur 17 va maintenant être explicité.

Avant d'utiliser le télécopieur 17 une première fois, on le met en service, en l'alimentant et en le reliant au réseau téléphonique 101.

Pour connecter le télécopieur 17 à l'Internet 100, que ce soit pour une première connexion ou pour une connexion ultérieure, un utilisateur appuie sur la touche de connexion Internet 13 en commandant ainsi l'exécution automatique de l'application 9 de connexion à l'Internet 100, comme décrit ci-après.

Le télécopieur 17 appelle le fournisseur 20 à travers le réseau téléphonique 101. Après établissement d'une communication téléphonique entre le télécopieur 17 et le fournisseur 20, le télécopieur 17 exécute un protocole de connexion téléphonique à l'Internet 100, au cours duquel il fournit au fournisseur 20, sur requête de celui-ci, différentes informations de connexion Internet, stockées dans la mémoire 11, telles que les logins et le mots de passe associé de connexion Internet et de messagerie électronique. La connexion Internet étant établie, l'écran 3 affiche un message indiquant l'état connecté du télécopieur 17.

L'émission d'une télécopie par courrier électronique et la réception de courriers électroniques vont maintenant être décrites.

Pour émettre une télécopie, par courrier électronique, à travers l'Internet 100, l'utilisateur introduit la télécopie dans le bloc d'analyse d'image 6. Par ailleurs, il saisit l'adresse e-mail du destinataire de la télécopie, à l'aide du clavier 2, et appuie sur la touche d'émission 14 en déclenchant ainsi l'exécution automatique des étapes suivantes. Le bloc 6 analyse la télécopie et le bloc de messagerie 10 prépare un courrier électronique dans lequel il insère la télécopie. L'en-tête du courrier électronique contient, dans le champ "TO", l'adresse e-mail du destinataire de la télécopie, et, dans le champ "FROM", l'adresse e-mail du télécopieur 17, stockée dans la mémoire 11. Puis, le télécopieur 17 se connecte à l'Internet 100, par l'intermédiaire du fournisseur 20, et envoie à celui-ci le courrier électronique contenant la télécopie, à travers le réseau téléphonique 101. Le fournisseur 20 reçoit le courrier et le retransmet vers l'Internet 100 qui l'achemine jusqu'au destinataire.

Pour récupérer des courriers électroniques reçus dans la boîte à lettres 21, l'utilisateur appuie sur la touche de téléchargement 15 en déclenchant ainsi l'exécution automatique des étapes suivantes. Le télécopieur 17 se connecte à l'Internet 100 et, après établissement de la connexion, le bloc de messagerie 10 adresse au fournisseur 20, à travers le réseau téléphonique 101, une requête de téléchargement des courriers électroniques reçus et stockés dans la boîte à lettres 21. Le cas échéant, le fournisseur 20 transmet au télécopieur 17 les courriers électroniques contenus dans la boîte à lettres 21, à travers le réseau téléphonique 101.

On rappelle ici que l'adresse e-mail du télécopieur 17, stockée dans la mémoire 11, et l'accès Internet dont disposent le télécopieur 17 sont provisoires, valables seulement pendant une période d'essai limitée à compter de la première connexion à l'Internet 100 du télécopieur 17.

Avant l'expiration de la période d'essai, le télécopieur 17 peut confirmer la connexion Internet, afin de prolonger son accès à l'Internet 100 pendant une période supplémentaire, et, le cas échéant, demander une adresse e-mail définitive, pouvant être différente de la première adresse provisoire.

Pour confirmer la connexion Internet et changer d'adresse e-mail, l'utilisateur sélectionne une option de *"confirmation de connexion Internet",* dans un menu de l'interface utilisateur 4. La sélection de cette option déclenche l'exécution automatique, par le télécopieur 17, des étapes décrites ci-après, de confirmation de connexion Internet et de changement d'adresse e-mail.

Le télécopieur 17 demande à l'utilisateur, par affichage d'un message à l'écran 3, s'il souhaite confirmer la connexion Internet et changer d'adresse e-mail et l'invite, le cas échéant, à saisir une nouvelle adresse e-mail, définitive. Le bloc de messagerie 10 prépare un courrier électronique de confirmation de connexion Internet et de changement d'adresse e-mail. L'en-tête du courrier contient ici, dans le champ "FROM", l'adresse e-mail du télécopieur 17, dans le champ "TO", l'adresse e-mail de la boîte à lettres 22 et, dans le champ objet, la nouvelle adresse e-mail du télécopieur 17. Le télécopieur 17 se connecte ensuite à l'Internet 100 et expédie le courrier de confirmation de connexion Internet et de changement d'adresse. Ce courrier constitue en définitive une requête pour confirmer la connexion Internet du télécopieur 17 et obtenir une adresse e-mail définitive.

Après réception du courrier dans la boîte à lettres 22, le fournisseur 20 extrait du champ objet de ce courrier l'adresse e-mail requise par le télécopieur 17.

Afin de vérifier si l'adresse e-mail requise est disponible, le fournisseur 30 la compare aux adresses e-mail de la table 23 d'adresses e-mail indisponibles. Dans le cas où l'adresse e-mail demandée par le télécopieur 17 n'est pas contenue dans la table 23, le fournisseur 20 attribue cette adresse au télécopieur 17. Dans le cas contraire, le fournisseur 20 attribue au télécopieur 17 une autre adresse e-mail disponible, ressemblant autant que possible à celle demandée. Après avoir attribué au télécopieur 17 une nouvelle adresse e-mail, définitive, le fournisseur 20 envoie au télécopieur 17 un courrier électronique, adressé à la première adresse e-mail du télécopieur 17, spécifiant la nouvelle adresse e-mail du télécopieur 17.

Après avoir expédié le courrier de confirmation de connexion Internet et de changement d'adresse e-mail, le télécopieur 17 se déconnecte de l'Internet 100. Ultérieurement, il se reconnecte de façon automatique à l'Internet 100, récupère le courrier indiquant l'adresse e-mail définitive attribuée par le fournisseur 20, reçu dans la boîte à lettres 21, et imprime ce courrier. A l'aide du clavier de saisie 2 et par le biais de l'interface utilisateur 4, l'utilisateur saisit la nouvelle adresse e-mail du télécopieur 17 qui est substituée à celle provisoire, préalablement stockée dans la mémoire 11.

Dans le cas où l'utilisateur souhaite prolonger la connexion Internet et conserver la même adresse e-mail, le bloc de messagerie 10 prépare et envoie vers la boîte à lettres 22 un courrier de confirmation de connexion Internet contenant, dans le champ objet, la première adresse e-mail du télécopieur 17. Celle-ci est alors attribuée définitivement au télécopieur 17 par le fournisseur 20 qui envoie à la boîte à lettres 21 du télécopieur 17 un courrier spécifiant l'adresse e-mail définitive.

En variante, après téléchargement par le télécopieur 17 du courrier indiquant l'adresse e-mail définitive, le télécopieur pourrait, de façon automatique, en extraire l'adresse e-mail définitive, contenue dans un champ spécifique, le champ objet par exemple, et/ou délimitée par des bornes de marquage, formées de caractères particuliers et reconnaissables par le télécopieur, et la substituer à l'adresse e-mail provisoire stockée dans la mémoire de configuration de connexion Internet.

Dans la description qui vient d'être faite, le login de connexion Internet et le login de messagerie électronique sont ici tous deux identiques, et il en va de même pour les mots de passe associés. Les logins de connexion Internet et de messagerie électronique, tout comme les mots de passe associés, pourraient tout aussi bien être différents.

Par ailleurs, le fournisseur d'accès 20 est également fournisseur de messagerie électronique, mais il pourrait également s'agir de deux entités distinctes.

On pourrait en outre envisager de mémoriser dans la mémoire de configuration de connexion Internet, préalablement à la mise en service du télécopieur, des paramètres de configuration de connexion Internet relatifs à plusieurs fournisseurs de messagerie électronique, l'utilisateur pouvant dans ce cas choisir l'un d'entre eux, avant la première connexion à l'Internet.

Enfin, au lieu d'insérer l'adresse e-mail définitive requise par le télécopieur 17 dans le champ objet du courrier de confirmation de connexion Internet, on pourrait l'insérer dans le corps du message du courrier et, dans ce cas, le délimiter par des bornes de marquage, formées de caractères particuliers et reconnaissables par le fournisseur.

## Revendications

1. Procédé de configuration d'une connexion à un réseau informatique (100) d'un équipement de communication (17) comprenant des moyens (9) de connexion au réseau informatique (100), dans lequel c'est avant de mettre en service l'équipement (17) et de le connecter au réseau informatique (100) qu'on mémorise dans l'équipement (17) des paramètres de configuration de connexion audit réseau (100) dont une adresse de messagerie électronique provisoire.

2. Procédé selon la revendication 1, dans lequel, l'équipement (17) bénéficiant d'un service de messagerie électronique auprès d'un fournisseur (20) du réseau informatique (100), l'équipement (17) se connecte au fournisseur (20) et lui adresse une requête pour obtenir une adresse de messagerie électronique définitive.

3. Procédé selon la revendication 2, dans lequel le fournisseur (20) compare l'adresse de messagerie électronique requise à celles contenues dans une table (23) d'adresses de messagerie électronique indisponibles pour, dans le cas où la table (23) ne contient pas l'adresse de messagerie électronique requise, attribuer celle-ci à l'équipement (17) et, dans le cas contraire, attribuer à l'équipement (17) une adresse de messagerie électronique disponible.

4. Procédé selon l'une des revendications 1 à 3, dans lequel l'équipement (17) adresse par courrier électronique la requête pour obtenir une adresse de messagerie électronique définitive.

5. Procédé selon l'une des revendications 3 et 4, dans lequel le fournisseur (20) envoie à l'équipement un courrier électronique spécifiant l'adresse de messagerie électronique qu'il lui a attribuée.

## Claims

1. Method for configuring a connection to a data network (100) of a communication apparatus (17) comprising means (9) for connection to the data network (100), wherein configuration parameters for connection to the said network (100) including a provisional electronic messaging address are stored in the apparatus (17) before the apparatus (17) is brought into use and connected to the data network (100).

2. Method as claimed in claim 1, wherein since the apparatus (17) benefits from an electronic messaging service with a provider (20) of the data network (100), the apparatus (17) is connected to the provider (20) and sends it a request to obtain a definitive electronic messaging address.

3. Method as claimed in claim 2, wherein the provider (20) compares the requested electronic messaging address with those contained in a table (23) of unavailable electronic messaging addresses in order, in the event that the table (23) does not contain the requested electronic messaging address, to allocate this address to the apparatus (17) and, in the opposite case, to allocate to the apparatus (17) an available electronic messaging address.

4. Method as claimed in any one of claims 1 to 3, wherein the apparatus (17) e-mails the request to obtain a definitive electronic messaging address.

5. Method as claimed in any one of claims 3 and 4, wherein the provider (20) sends the apparatus an e-mail specifying the electronic messaging address which it has allocated thereto.

## Patentansprüche

1. Verfahren zur Konfiguration einer Verbindung einer Mittel (9) zur Verbindung mit einem Computernetz (100) aufweisenden Kommunikationseinrichtung (17) mit einem Computernetz (100), wobei vor der Inbetriebnahme der Einrichtung (17) und ihrer Verbindung mit dem Computernetz (100) in der Einrichtung (17) Parameter zur Konfiguration der Verbindung mit dem Netz (100), darunter eine vorläufige E-Mail-Adresse, gespeichert werden.

2. Verfahren nach Anspruch 1, wobei die Einrichtung (17) ein E-Mail-Dienst bei einem Provider (20) des Computernetzes (100) nutzt und die Einrichtung (17) eine Verbindung zum Provider (20) aufbaut und an ihn eine Anforderung zum Erhalt einer endgültigen E-Mail-Adresse sendet.

3. Verfahren nach Anspruch 2, wobei der Provider (20) die angeforderte E-Mail-Adresse mit denjenigen in einer Tabelle (23) mit nicht verfügbaren E-Mail-Adressen vergleicht, um falls diese Tabelle (23) die angeforderte E-Mail-Adresse nicht enthält, diese der Einrichtung (17) zuzuweisen und anderenfalls der Einrichtung (17) eine verfügbare E-Mail-Adresse zuzuweisen.

4. Verfahren nach einem der Ansprüche 1 bis 3, wobei die Einrichtung (17) die Anforderung zum Erhalt einer endgültigen E-Mail-Adresse per E-Mail sendet.

5. Verfahren nach Anspruch 3 oder 4, wobei der Provider (20) der Einrichtung eine E-Mail sendet, die die E-Mail-Adresse spezifiziert, welche er ihr zugeteilt hat.
